# EUROPEAN PATENT APPLICATION

(11) **EP 4 556 856 A1**
(43) Date of publication of application: **21.05.2025**
(21) Application number: 24212811.4
(22) Date of filing: 13.11.2024
(51) Int. Cl.: G01C 21/36, G01C 21/00, G06T 7/73, G06V 20/00

(54) **ELECTRONIC DEVICE, CONTROL METHOD, AND NON-TRANSITORY COMPUTER READABLE STORAGE MEDIUM**

(30) Priority: 14.11.2023 US 202363598914 P; 14.11.2023 US 202363598915 P
(71) Applicant: HTC Corporation, Taoyuan City 330, (TW)
(72) Inventor: HUANG, Chun-Kai, 330 Taoyuan City (TW)
(74) Representative: Carstens, Dirk Wilhelm

(57) **Abstract**

An electronic device is disclosed. The electronic device includes a memory, a camera circuit, and a processor. The memory is configured to store a physical map and a database. The database includes several predefined common object images corresponding several common object 3D data. The camera circuit is configured to capture an environmental image. The processor is configured to: obtain a first common object image from the environmental image; extract several feature points from the environmental image; adjust several first feature points of the feature points when a first common object 3D data of the several common object 3D data is aligned to the first common object image; and update the SLAM map according to the plurality of feature points of the environmental image.

## Description

### BACKGROUND

### FIELD OF INVENTION

The present application relates to an electronic device, a control method, and a non-transitory computer readable storage medium. More particularly, the present application relates to an electronic device, a control method, and a non-transitory computer readable storage medium with a SLAM (simultaneous localization and mapping) system.

### DESCRIPTION OF RELATED ART

When using SLAM (Simultaneous Localization and Mapping) systems outdoors, there are often more challenging tracking conditions compared to indoor environments. These challenges include the presence of moving objects such as pedestrians and vehicles, as well as dynamic elements like trees and clouds, which exhibit high similarity but inherent variations. These tracking challenges are frequently encountered in outdoor scenes.

Another difference between outdoor and indoor environments is the infinite expanse of the skyline. Outdoors, there are no end walls, which reduce the availability of trackable features. Instead, the sky and ground often occupy the tracking scene, both of which are challenging to track.

Therefore, how to track the features of the outdoor environments and to locate the electronic device within the SLAM map precisely while operating the electronic device with the SLAM system outdoors is a problem to be solved.

### SUMMARY

The disclosure provides an electronic device. The electronic device is configured to construct a SLAM map with a SLAM module. The electronic device includes a memory, a camera circuit, and a processor. The memory is configured to store a physical map and a database. The database includes several predefined common object images corresponding several common object 3D data. The camera circuit is configured to capture an environmental image. The processor is coupled to the memory and the camera circuit. The processor is configured to: obtain a first common object image from the environmental image; extract several feature points from the environmental image; adjust several first feature points of the feature points when a first common object 3D data of the several common object 3D data is aligned to the first common object image; and update the SLAM map according to the plurality of feature points of the environmental image.

The disclosure provides a control method. The control method is suitable for an electronic device. The control method includes the following operations: storing a physical map and a database, in which the database includes several predefined common object images corresponding several common object 3D data; capturing an environmental image; obtaining a first common object image from the environmental image,; extracting several feature points from the environmental image; adjusting several first feature points of the feature points when a first common object 3D data of the several common object 3D data is aligned to the first common object image; and updating a SLAM map constructed by the electronic device according to the plurality of feature points of the environmental image.

The disclosure provides a non-transitory computer readable storage medium with a computer program to execute aforesaid control method.

It is to be understood that both the foregoing general description and the following detailed description are by examples and are intended to provide further explanation of the invention as claimed.

### BRIEF DESCRIPTION OF THE DRAWINGS

Aspects of the present disclosure are best understood from the following detailed description when read with the accompanying figures. It is noted that, according to the standard practice in the industry, various features are not drawn to scale. In fact, the dimensions of the various features may be arbitrarily increased or reduced for clarity of discussion.
Fig. 1 is a schematic block diagram illustrating an electronic device in accordance with some embodiments of the present disclosure.
Fig. 2 is a schematic diagram illustrating a user operating the electronic device as illustrated in Fig. 1 in accordance with some embodiments of the present disclosure.
Fig. 3 is a flowchart illustrating a control method in accordance with some embodiments of the present disclosure.
Fig. 4 is a schematic diagram illustrating an environmental image captured by the camera circuit while the electronic device is operated in the real space as illustrated in Fig. 2 in accordance with some embodiments of the present disclosure.
Fig. 5 is a flow chart illustrating an operation as illustrated in Fig. 3 in accordance with some embodiments of the present disclosure.
Fig. 6 is a schematic diagram illustrating an example of an operation as illustrated in Fig. 5 in accordance with some embodiments of the present disclosure.
Fig. 7 is a flow chart illustrating an operation as illustrated in Fig. 3 in accordance with some embodiments of the present disclosure.
Fig. 8 is a schematic diagram illustrating a physical map in accordance with some embodiments of the present disclosure.
Fig. 9 is a flow chart illustrating an operation as illustrated in Fig. 7 in accordance with some embodiments of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

It will be understood that, in the description herein and throughout the claims that follow, although the terms "first," "second," etc. may be used to describe various elements, these elements should not be limited by these terms. These terms are only used to distinguish one element from another. For example, a first element could be termed a second element, and, similarly, a second element could be termed a first element, without departing from the scope of the embodiments.

It will be understood that, in the description herein and throughout the claims that follow, the terms "comprise" or "comprising," "include" or "including," "have" or "having," "contain" or "containing" and the like used herein are to be understood to be open-ended, i.e., to mean including but not limited to.

It will be understood that, in the description herein and throughout the claims that follow, the phrase "and/or" includes any and all combinations of one or more of the associated listed items.

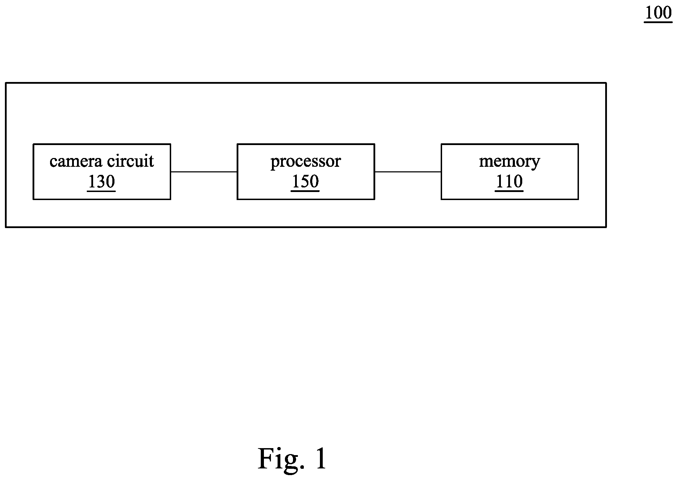

Reference is made to Fig. 1. Fig. 1 is a schematic block diagram illustrating an electronic device 100 in accordance with some embodiments of the present disclosure. As illustrated in Fig. 1, the electronic device 100 includes a memory 110, a camera circuit 130, and a processor 150. In the connection relationship, the memory 110 is coupled to the processor 150, and the processor 150 is coupled to the camera circuit 130.

It should be noted that the electronic device 100 in Fig. 1 is for illustrative purposes only, and the embodiments of the present disclosure are not limited thereto. For example, in some embodiments, the electronic device 100 includes several camera circuits.

One or more programs are stored in the memory 110 and are configured to be executed by the processor 150, in order to perform a control method.

In some embodiments, the electronic device 100 may be an HMD (head-mounted display) device, a tracking device, or any other device with self-tracking function. The HMD device may be worn on the head of a user.

In some embodiments, the memory 110 stores a SLAM (Simultaneous localization and mapping) module. The electronic device 100 may be configured to process the SLAM module. The SLAM module includes functions such as image capturing, features extracting from the image, and localizing according to the extracted features. In some embodiments, the SLAM module includes a SLAM algorithm, in which the processor 150 accesses and processes the SLAM module so as to generate a SLAM map according to the extracted features and to localize the electronic device 100 within the SLAM map according to the images captured by the camera circuit 130 of the electronic device 100.

Specifically, in some embodiments, the electronic device 100 may be applied in a virtual reality (VR)/mixed reality (MR)/augmented reality (AR) system. For example, the electronic device 100 may be realized by a standalone head mounted display device (HMD) or VIVE HMD.

In some embodiments, the processor 150 can be realized by, for example, one or more processing circuits, such as central processing circuits and/or micro processing circuits but are not limited in this regard. In some embodiments, the memory 110 includes one or more memory devices, each of which includes, or a plurality of which collectively include a computer readable storage medium. The non-transitory computer readable storage medium may include a read-only memory (ROM), a flash memory, a floppy disk, a hard disk, an optical disc, a flash disk, a flash drive, a tape, a database accessible from a network, and/or any storage medium with the same functionality that can be contemplated by persons of ordinary skill in the art to which this disclosure pertains.

In some embodiments, the camera circuit 130 may be a camera with image capturing functions.

In some embodiments, the electronic device 100 includes other circuits such as a display circuit and an I/O circuit. In some embodiments, the display circuit covers a field of view of the user and shows a virtual image at the field of view of the user.

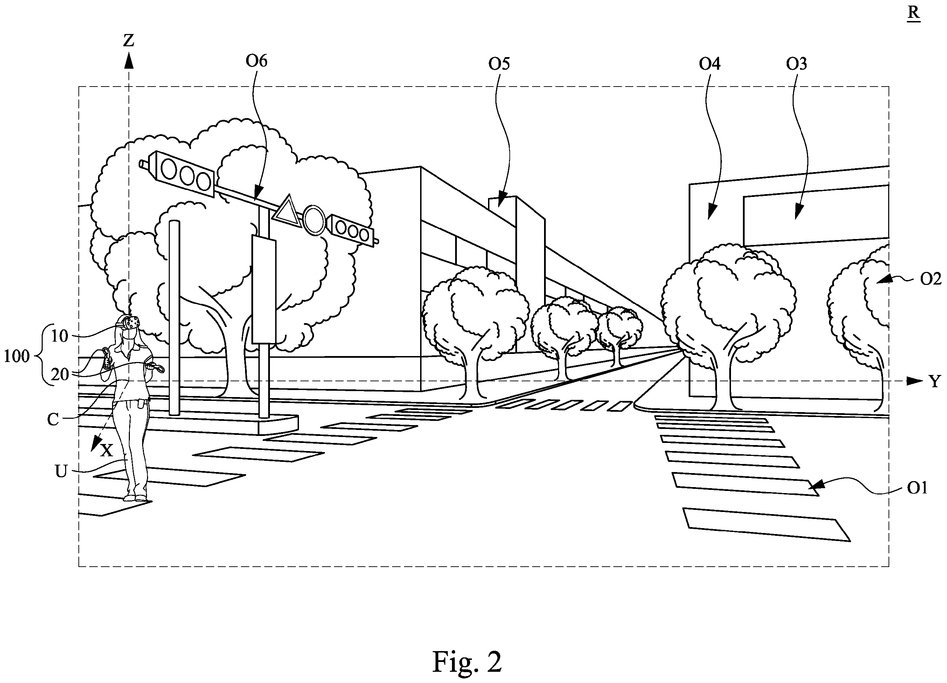

Reference is made to Fig. 2 together. Fig. 2 is a schematic diagram illustrating a user U operating the electronic device 100 as illustrated in Fig. 1 in accordance with some embodiments of the present disclosure.

As illustrated in Fig. 2, the user U is wearing an HMD device 10 on the head and holding tracking devices 20 on the hands. In some embodiments, the HMD device 10 and the tracking devices 20 as illustrated in Fig. 2 represent the electronic device 100 as illustrated in Fig. 1.

In some embodiments, when the electronic device 100 is operating in the real space R, the camera circuit 130 as illustrated in Fig. 1 obtains several environmental images corresponding to the real space R. In some embodiments, the environmental images are the tracking scenes, and the processor 150 establishes a SLAM map including a coordinate system C in correspondence to the real space R according to several environmental images obtained by the camera circuit 130. The directions X, Y, and Z are the three axes of the coordinate system C. In some embodiments, the processor 150 obtains a pose of the electronic device 100 within the coordinate system C of the SLAM map according to the features obtained from the environmental images captured by the camera circuit 130.

When the electronic device 100 moves in the real space R, the processor 150 tracks the pose of the electronic device 100 within the coordinate system C of the SLAM map.

In other embodiments, the coordinate system C of the SLAM map could be an augmented reality coordinate system, an extended reality coordinate system, or a mixed reality coordinate system. In some embodiments, the pose of the electronic device 100 includes a position and a rotation angle.

As illustrated in Fig. 2. In some embodiments, the real space R includes several common objects O1 to O6 that commonly exist outdoors, such as the sidewalks, trees, signs, streetlights, traffic lights, buildings, and so on. It should be noted that the common objects O1 to O6 as mentioned above are for illustrative purposes only, and more common objects may exist in the real space R.

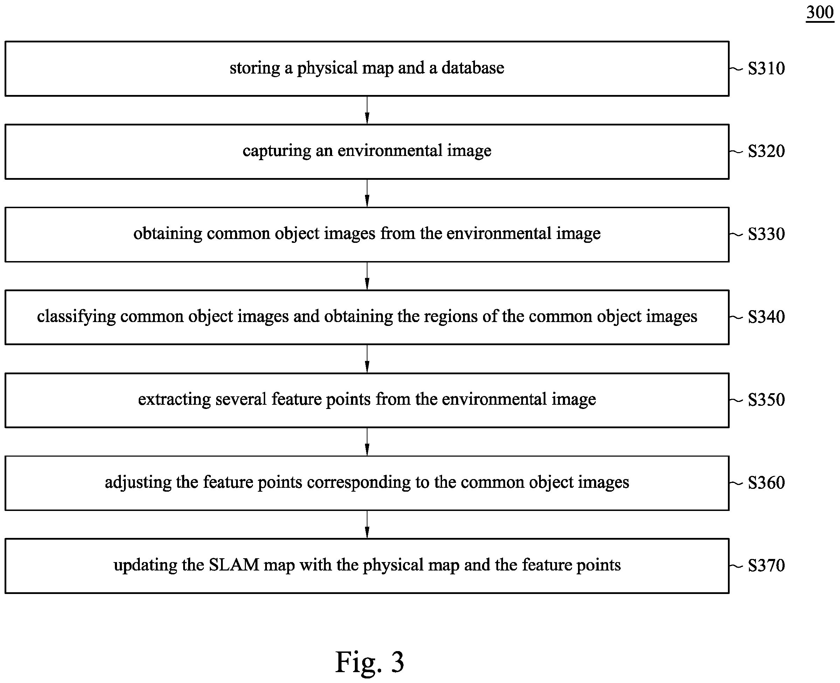

Reference is made to Fig. 3. For better understanding of the present disclosure, the detailed operation of the electronic device 100 as illustrated in Fig. 1 will be discussed in accompanying the embodiments shown in Fig. 3. Fig. 3 is a flowchart illustrating a control method 300 in accordance with some embodiments of the present disclosure. It should be noted that the control method 300 can be applied to a device having a structure that is the same as or similar to the structured of the electronic device 100 shown in Fig. 1. To simplify the description below, the embodiments shown in Fig. 1 will be used as an example to describe the control method 300 in accordance with some embodiments of the present disclosure. However, the present disclosure is not limited to the embodiments shown in Fig. 1.

As shown in Fig. 3, the control method 300 includes operations S310 to S370.

In operation S310, a physical map and a database are stored in the memory 110 of the electronic device 100. In some embodiments, the database includes several common object types. Each of the common object types includes several predefined common object images and common object 3D data. In some embodiments, each of the predefined common object images corresponds to one of the common object 3D data.

For example, in some embodiments, the common object types include a sidewalks type, a trees type, a signs type, a streetlights type, a traffic lights type, a buildings type, and so on. Take the streetlights type as an example. In some embodiments, the streetlights type includes several different images of the streetlights and several 3D data (for example, 3D images or 3D models) of different street lights.

In some embodiments, the processor 150 obtains the GPS (global positioning system) position of the electronic device 100. According to the GPS position of the electronic device 100, the processor 150 obtains the physical map and the database corresponding to the GPS position. For example, in some embodiments, the processor 150 obtains the physical map within a certain range of the GPS position, and the processor 150 obtains the database with the common objects within the certain range of the GPS position.

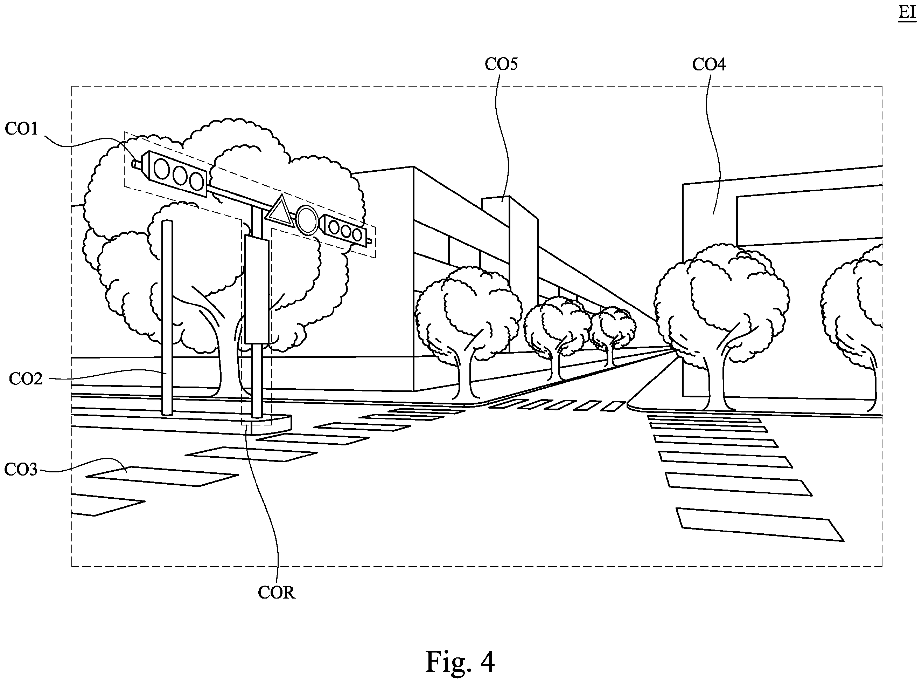

In operation S320, an environmental image is captured by the camera circuit 130. Reference is made to Fig. 4 together. Fig. 4 is a schematic diagram illustrating an environmental image EI captured by the camera circuit 130 while the electronic device 100 is operated in the real space R as illustrated in Fig. 2 in accordance with some embodiments of the present disclosure.

In operation S330, several common object images are obtained from the environmental image EI by the processor 150. Reference is made to Fig. 4 together. According to the environmental image EI, the processor 150 obtains common object images CO1 to CO5. Each of the common object images CO1 to CO5 corresponds to one of the common objects in the real space R as illustrated in Fig. 2.

In Fig. 4, the common object image CO1 is a common object image of a traffic light, the common object image CO2 is a common object image of a streetlight, the common object image CO3 is a common object image of a sidewalks, the common object image CO4 and the common object image CO5 are common object images of buildings.

In operation S340, several common object images are classified and the regions of the common object images are obtained by the processor 150. Reference is made to Fig. 4 together. Take the common object image CO1 as an example. In operation S340, the processor 150 compares the common object image CO1 to the several predefined common object images of the database, and the processor 150 chooses the common object image type including the predefined common object image most similar to the common object image CO1. For example, in an embodiment, the processor 150 decides that the streetlights type is the common object image type of the common object image CO1.

Moreover, in operation S340, the processor 150 obtains the region COR of the common object image CO1 in the environmental image EI, as illustrated in Fig. 4. In some embodiments, the processor 150 obtains the region COR with image detection algorithm.

In operation S350, several feature points are extracted from the environmental image EI. In some embodiments, in operation S350, the processor 150 further emphasized the region COR of the common object image CO1 in the environmental image EI and the feature points within the region COR corresponding to the common object image CO1.

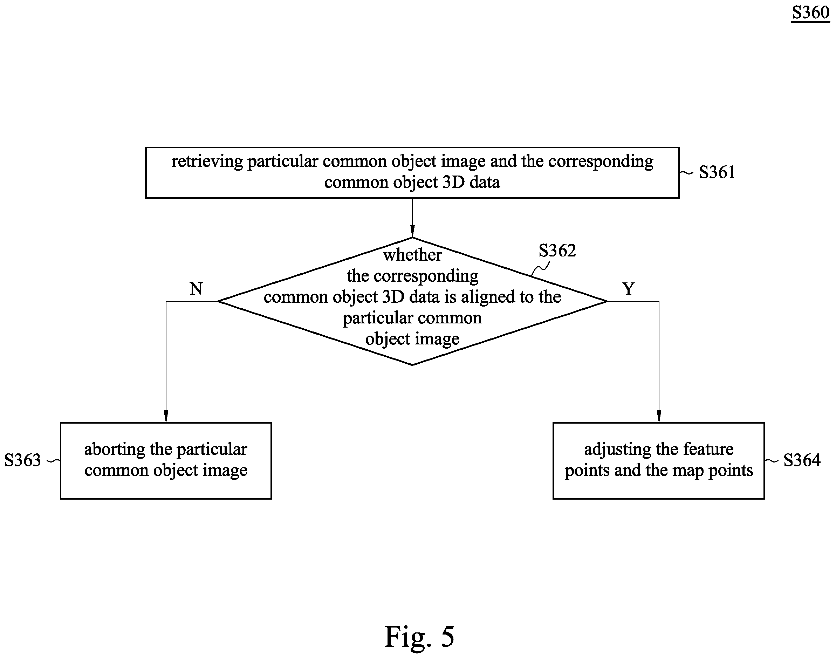

In operation S360, the feature points corresponding to the common object images are adjusted by the processor 150. Reference is made to Fig. 5 together. Fig. 5 is a flow chart illustrating the operation S360 as illustrated in Fig. 3 in accordance with some embodiments of the present disclosure. As illustrated in Fig. 5, operation S360 includes operations S361 to S364.

In operation S361, the particular common object image and the corresponding common object 3D data are retrieved by the processor 150. Reference is made to Fig. 4 together.

For example, in operation S361, common object image CO1 is taken as the particular common object image. The processor 150 then retrieves the corresponding common object 3D data which corresponds to the predefined common object image which is most similar to the common object image CO1 from the database.

In some embodiments, the common object 3D data includes the geometric and visual properties of objects in three-dimensional space.

In operation S362, it is determined whether the corresponding common object 3D data is aligned to the particular common object image by the processor 150. In some embodiments, the processor 150 adjusts the size and the position of the corresponding common object 3D data to align the corresponding common object 3D data to the particular common object image. In some embodiments, the processor 150 further rotates the corresponding common object 3D data to align the corresponding common object 3D data to the particular common object image.

In some embodiments, when the corresponding common object 3D data is successfully aligned to the particular common object image, operation S364 is performed. When the corresponding common object 3D data is not successfully aligned to the particular common object image, operation S363 is performed.

In some embodiments, when the deviation between the adjusted, rotated, and positioned corresponding common object 3D data and the particular common object image is smaller than a deviation threshold, it is determined that the corresponding common object 3D data is successfully aligned to the particular common object image.

In operation S363, the particular common object image is aborted by the processor 150. That is, the particular common object image and the corresponding feature points are not emphasized when locating the pose of the electronic device 100 or when updating the SLAM map.

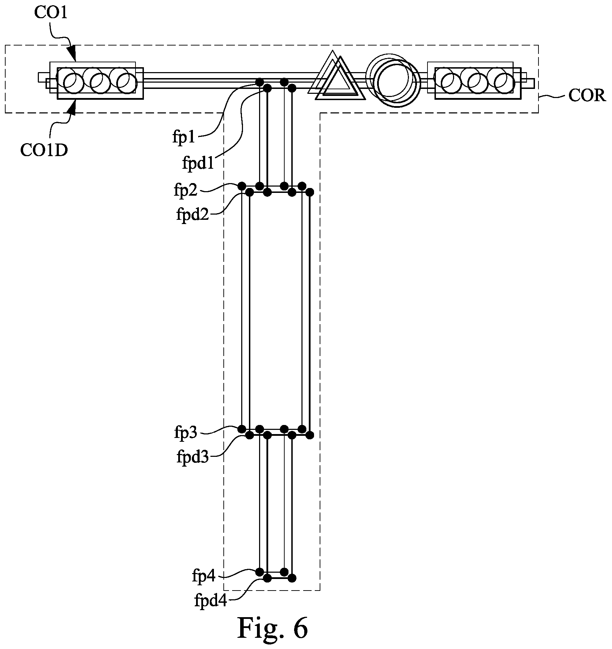

In operation S364, the feature points and the map points are adjusted by the processor 150. Reference is made to Fig. 6 together. Fig. 6 is a schematic diagram illustrating an example of operation S364 in accordance with some embodiments of the present disclosure. As illustrated in Fig. 6, within the region COR corresponding to the common object image CO1, the common object image CO1 includes several feature points fp1 to fp4, and when the corresponding common object 3D data CO1D is aligned to the common object image CO1 within the environmental image EI, the corresponding common object 3D data CO1D includes the feature points fpd1 to fpd4.

In some embodiments, in operation S364, the processor 150 adjusts the feature points corresponding to the common object image CO1 of the environmental image EI by replacing the feature points fp1 to fp4 with the feature points fpd1 to fpd4. That is, when locating the pose of the electronic device 100 or when updating the SLAM map, the processor 150 takes the feature points fp1 to fp4 into consideration instead of the feature points fpd1 to fpd4.

In some embodiments, the feature points of the environmental image EI captured by the processor 150 are taken as the map points of the SLAM map. Each of the map points includes a coordinate value in the coordinate system C of the SLAM map. Each of the feature points may be converted into a map point.

The conversion method between the map points and the feature points may be, for example, through the feature points and the coordinate values and the direction values of the images, that is, the environmental image, captured by the camera circuit 130 of the electronic device 100. In the SLAM system, all of the images captured by the camera circuit 130 of the electronic device 100 will be given a coordinate value and a direction value, and the feature points of the environmental image EI can be converted into map point coordinates through the coordinate value and the direction value of the environmental image EI.

The environmental image EI of the past is stored in the SLAM map as a key frame, and the coordinate values and the direction values of the environmental image EI will be updated at the same time when the SLAM map is updated.

In some embodiments, when the feature points are adjusted in operation S364, the map points are correspondingly adjusted.

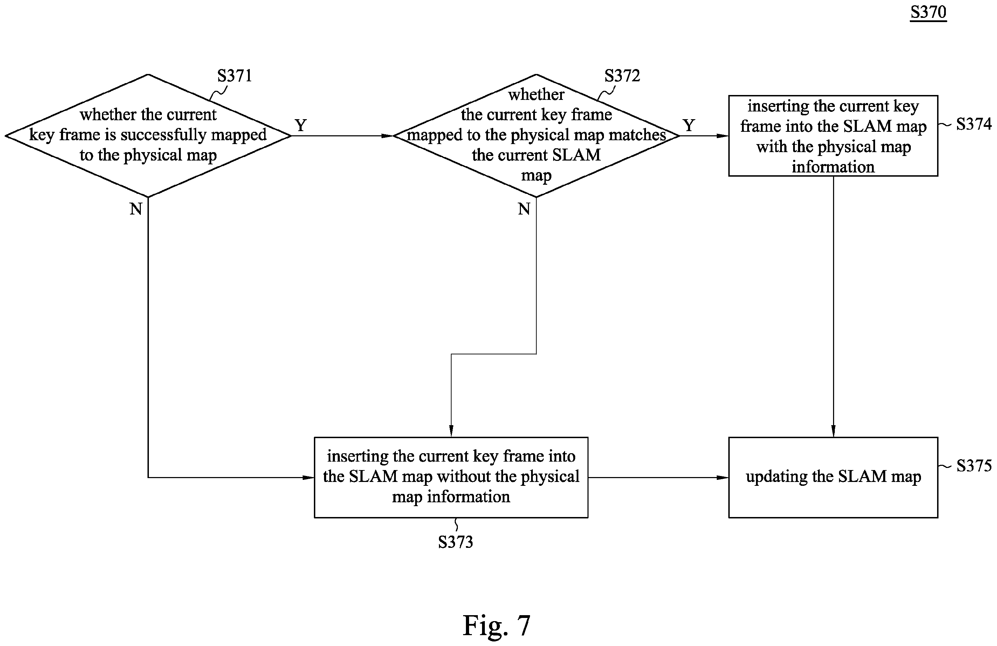

Reference is made to Fig. 3 again. In operation S370, the SLAM map is updated with the physical map and the feature points by the processor 150. Reference is made to Fig. 7 together. Fig. 7 is a flow chart illustrating operation S370 as illustrated in Fig. 3 in accordance with some embodiments of the present disclosure. As illustrated in Fig. 7, operation S370 includes operation S371 to S375.

In some embodiments, the environmental image EI with the feature points and the adjusted feature points in operation S360 as illustrated in Fig. 3 is taken as the current key frame in operation S370.

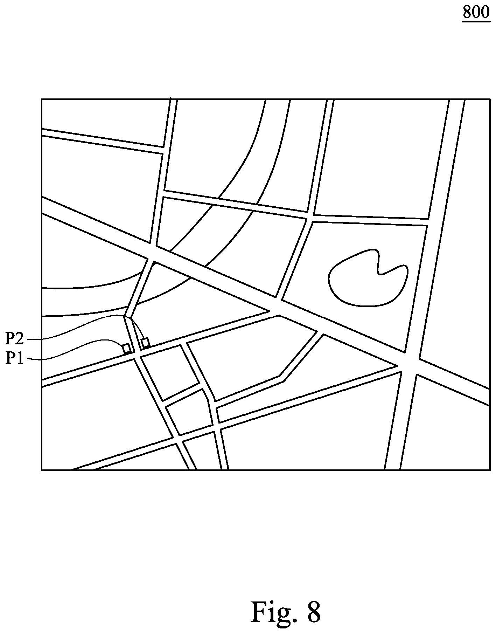

In operation S371, it is determined whether the current key frame is successfully mapped to the physical map. Reference is made to Fig. 8. Fig. 8 is a schematic diagram illustrating a physical map 800 in accordance with some embodiments of the present disclosure.

In some embodiments, the physical map 800 includes the positions of the streets, the buildings, the street blocks, etc., as illustrated in Fig. 8. In some embodiments, the physical map 800 also includes relative distances between the streets, the buildings, the street blocks.

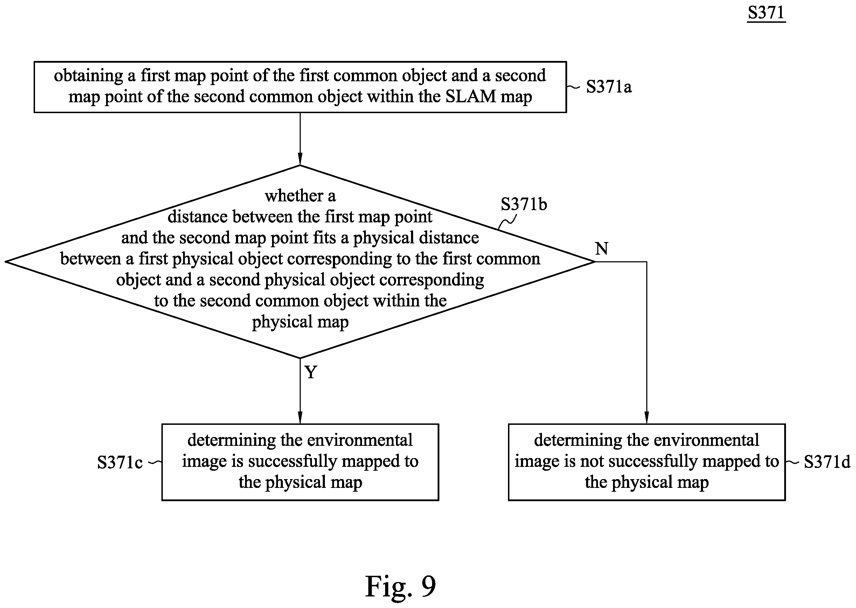

Reference is made to Fig. 9 together. Fig. 9 is a flow chart illustrating the operation S371 as illustrated in Fig. 7 in accordance with some embodiments of the present disclosure. As illustrated in Fig. 9, operation S371 includes operations S371a to S371d.

In operation S371a, a first map point of the first common object and a second map point of the second common object within the SLAM map are obtained.

Reference is made to Fig. 2 and Fig. 4 together. According to the feature points of the common object image CO5 in Fig. 4, the processor 150 in Fig. 1 obtains the map point of the common object O5 as illustrated in Fig. 2 corresponding to the common object image CO5. Similarly, according to the feature points of the common object image CO4 in Fig. 4, the processor 150 in Fig. 1 obtains the map point of the common object O4 as illustrated in Fig. 2 corresponding to the common object image CO4.

In some embodiments, the center or the average of the feature points of the common object image is used to calculate the map point of the common object corresponding to the common object image.

In operation S371b, it is determined whether a distance between the first map point and the second map point fits a physical distance between a first physical object corresponding to the first common object and a second physical object corresponding to the second common object within the physical map.

Reference is made to Fig. 8 together. In Fig. 8, the physical object P1 is the common object O5 in Fig. 8, and the physical object P2 is the common object O4 in Fig. 8. In some embodiments, the physical map 800 records the physical distance between the physical object P1 and the physical object P2. In some embodiments, the physical distance is the actual distance in the real space R.

In some embodiments, the processor 150 compares the physical distance between the physical object P1 and the physical object P2 to the distance between the map point of the common object O4 and the common object O5. When the deviation between the physical distance between the physical object P1 and the physical object P2 and the distance between the map point of the common object O4 and the map point of the common object O5 is smaller than a threshold value, it is determined that the physical distance between the physical object P1 and the physical object P2 fits the distance between the map point of the common object O4 and the map point of the common object O5.

In operation S371c, it is determined that the environmental image is successfully mapped to the physical map. That is, the corresponding pose of the electronic device 100 can be found in the physical map according to the current key frame, and the current key frame is successfully mapped to the physical map.

On the other hand, in operation S371d, it is determined that the environmental image is not successfully mapped to the physical map. That is, the corresponding pose of the electronic device 100 cannot be found in the physical map according to the current key frame, and the current key frame is not successfully mapped to the physical map.

Reference is made to Fig. 7 again. In operation S372, it is determined whether the current key frame mapped to the physical map matches the current SLAM map. In some embodiments, the processor 150 determines whether the current key frame conforms to the nearby key frames (e.g. the previous key frame and/or the following key frame).

When the current key frame conflicts with the nearby key frames, it is determined that the current key frame mapped to the physical map does not match the current SLAM map, and operation S373 is performed. On the other hand, when the current key frame conforms to the nearby key frames, it is determined that the current key frame mapped to the physical map matches the current SLAM map, and operation S374 is performed.

In some embodiments, in operation S372, the processor 150 determines that the current key frame matches the current SLAM map according to the physical map information of the current SLAM map.

In operation S373, the current key frame is inserted into the SLAM map without the physical map information. In some embodiments, in operation S373, according to the current key frame, the corresponding pose of the electronic device 100 cannot be found in the physical map or the pose corresponding to the current key frame in the physical map does not match the physical map information of the current SLAM map. That is, the current key frame is not mapped to the physical map or the current key frame does not matches the current SLAM map. Then, in operation S373, the current key frame is only inserted into the SLAM map in the form of the feature points, with all real matched information ignored. The current key frame is inserted into the SLAM map and the SLAM module without the physical map information.

In operation S374, the current key frame is inserted into the SLAM map with the physical map information. In some embodiments, in operation S374, according to the current key frame, the corresponding pose of the electronic device 100 is successfully found in the physical map and the current key frame matches the physical map of the SLAM map. That is, the current key frame is mapped to the physical map and the current key frame matches the current SLAM map. Then, in operation S374, the current key frame is inserted into the SLAM map and the SLAM module with the physical map information and the feature points.

In operation S375, the SLAM map is updated. In some embodiments, in operation S375, the processor 150 updates the SLAM map according to the inserted current key frame with/without the physical map information. In some embodiments, the physical map information includes the GPS information, the physical positions and relative distances between the objects within the physical map or the SLAM map, etc. With the updated SLAM map, the pose of the electronic device 100 may be obtained more accurately.

Through the operations of various embodiments described above, an electronic device, a control method, and a non-transitory computer readable storage medium are implemented. According to the predefined common object images such as sidewalks, crosswalks, business signs, streetlights, traffic lights, and more, stored in the database of the memory, pre-trained models may be employed to detect common object images in the environmental images and utilizing object discovery algorithms to search for the presence of expected common objects in the environmental images. By aligning the corresponding common object 3D data to the common object images in the environmental image, the accuracy of the feature points in the environmental image may be increased, and the accuracy of the tracking of the pose of the electronic device within the SLAM map may be increased.

Furthermore, in the embodiments of the present disclosure, the actual dimensions of the common objects in the physical map are prepared in advance. For example, the actual width of a crosswalk, the types and sizes of tiles, the patterns and feature locations of business signs, the sizes of streetlights and traffic lights, the dimensions of directional signs, and so on. By mapping the environmental image to the physical map according to the common objects, the accuracy of the pose of the electronic device within the SLAM map is further increased.

The advantage of tracking such predefined common objects lies in the fact that these common objects often have a long-term presence, are common in the outdoor environment of the area, and their predefined dimensions contribute to the accuracy of SLAM map points.

It should be noted that in the operations of the abovementioned control method 300, no particular sequence is required unless otherwise specified. Moreover, the operations may also be performed simultaneously or the execution times thereof may at least partially overlap.

Furthermore, the operations of the control method 300 may be added to, replaced, and/or eliminated as appropriate, in accordance with various embodiments of the present disclosure.

Various functional components or blocks have been described herein. As will be appreciated by persons skilled in the art, the functional blocks will preferably be implemented through circuits (either dedicated circuits, or general purpose circuits, which operate under the control of one or more processing circuits and coded instructions), which will typically include transistors or other circuit elements that are configured in such a way as to control the operation of the circuity in accordance with the functions and operations described herein.

Although the present disclosure has been described in considerable detail with reference to certain embodiments thereof, other embodiments are possible. Therefore, the scope of the appended claims should not be limited to the description of the embodiments contained herein.

It will be apparent to those skilled in the art that various modifications and variations can be made to the structured of the present invention without departing from the scope or spirit of the invention. In view of the foregoing, it is intended that the present invention cover modifications and variations of this invention provided they fall within the scope of the following claims.

## Claims

1. An electronic device, configured to construct a SLAM map with a SLAM module, comprising:
a memory, configured to store a physical map and a database, wherein the database comprises a plurality of predefined common object images corresponding a plurality of common object 3D data;
a camera circuit, configured to capture an environmental image; and
a processor, coupled to the memory and the camera circuit, configured to:
obtain a first common object image from the environmental image;
extract a plurality of feature points from the environmental image;
adjust a plurality of first feature points of the feature points when a first common object 3D data of the plurality of common object 3D data is aligned to the first common object image; and
update the SLAM map according to the plurality of feature points of the environmental image.

2. The electronic device of claim 1, wherein the first common object image matches a first predefined common object image of the plurality of predefined common object images, the first common object 3D data corresponds to the first predefined common object image, and the plurality of first feature points corresponds to the first common object image.

3. The electronic device of claim 1, wherein the processor is further configured to:
obtain a GPS position of the electronic device; and
obtain the physical map and the database according to the GPS position.

4. The electronic device of claim 1, wherein the database comprises a plurality of common object types, the processor is further configured to:
classify the first common object image into one of the plurality of common object types; and
obtain and emphasize a region of the first common object image within the environmental image.

5. The electronic device of claim 1, wherein the processor is further configured to:
abort the first common object image when the first common object 3D data is not aligned to the first common object image.

6. The electronic device of claim 1, wherein the processor is further configured to:
adjust a size and a location of the first common object 3D data to align the first common object 3D data to the first common object image;
obtain a plurality of second feature points according to the first common object 3D data when the first common object 3D data is aligned to the first common object image; and
replace the plurality of first feature points with the plurality of second feature points.

7. The electronic device of claim 1, wherein the processor is further configured to:
update the SLAM map with a physical map information of the physical map when the environmental image is mapped to the physical map and the environmental image matches the SLAM map.

8. The electronic device of claim 7, wherein the environmental image further comprises a second common object image corresponding a second common object, wherein the first common object image corresponds to a first common object, wherein the processor is further configured to:
obtain a first map point of the first common object and a second map point of the second common object within the SLAM map;
determine whether a distance between the first map point and the second map point fits a physical distance between a first physical object corresponding to the first common object and a second physical object corresponding to the second common object within the physical map; and
determine that the environmental image is mapped to the physical map when the distance fits the physical distance.

9. A control method, suitable for an electronic device, comprising:
storing a physical map and a database, wherein the database comprises a plurality of predefined common object images corresponding a plurality of common object 3D data;
capturing an environmental image;
obtaining a first common object image from the environmental image;
extracting a plurality of feature points from the environmental image;
adjusting a plurality of first feature points of the feature points when a first common object 3D data of the plurality of common object 3D data is aligned to the first common object image; and
updating a SLAM map constructed by the electronic device according to the plurality of feature points of the environmental image.

10. The control method of claim 9, wherein the first common object image matches a first predefined common object image of the plurality of predefined common object images, the first common object 3D data corresponds to the first predefined common object image, and the plurality of first feature points corresponds to the first common object image.

11. The control method of claim 9, further comprising:
obtaining a GPS position of the electronic device; and
obtaining the physical map and the database according to the GPS position.

12. The control method of claim 9, wherein the database comprises a plurality of common object types, wherein the control method further comprising:
classifying the first common object image into one of the plurality of common object types; and
obtaining and emphasizing a region of the first common object image within the environmental image.

13. The control method of claim 9, further comprising:
aborting the first common object image when the first common object 3D data is not aligned to the first common object image.

14. The control method of claim 9, wherein the operation of adjusting the plurality of first feature points of the plurality of feature points when the first common object 3D data of the plurality of common object 3D data is aligned to the first common object image of the environmental image comprising:
adjusting a size and a location of the first common object 3D data to align the first common object 3D data to the first common object image;
obtaining a plurality of second feature points according to the first common object 3D data when the first common object 3D data is aligned to the first common object image;
replacing the plurality of first feature points with the plurality of second feature points; and
updating the SLAM map with a physical map information of the physical map when the environmental image is mapped to the physical map and the environmental image matches the SLAM map.

15. A non-transitory computer readable storage medium, wherein the non-transitory computer readable storage medium comprises one or more computer programs stored therein, and the one or more computer programs can be executed by one or more processors so as to be configured to operate a control method, wherein the control method comprises:
storing a physical map and a database, wherein the database comprises a plurality of predefined common object images corresponding a plurality of common object 3D data;
capturing an environmental image;
obtaining a first common object image from the environmental image;
extracting a plurality of feature points from the environmental image;
adjusting a plurality of first feature points of the feature points when a first common object 3D data of the plurality of common object 3D data is aligned to the first common object image,; and
updating a SLAM map according to the plurality of feature points of the environmental image.
